# EUROPEAN PATENT APPLICATION

(11) **EP 0 669 738 A2**
(43) Date of publication of application: **30.08.1995**
(21) Application number: 94480158.8
(22) Date of filing: 06.12.1994
(51) Int. Cl.: H04L 25/02

(54) **System and method for automatically detecting speed, parity, and character length**

(30) Priority: 29.12.1993 US 175060
(71) Applicant: INTERNATIONAL BUSINESS MACHINES CORPORATION, Armonk, N.Y. 10504 (US)
(72) Inventor: Hart, Frank P., Cary, NC 27513 (US); Vojnovich, Theodore Brian, Cary, NC 27513 (US)
(74) Representative: Lattard, Nicole

(57) **Abstract**

A new system and method allows for the transmission speed, parity setting and character length setting of a remote device in an asynchronous network to be detected automatically. The system of the present invention comprises an oversampling counter for counting the duration of line transitions of a received data stream, means for storing the interval counts, means, based upon the detected line transitions, for determining the system baud rate, for determining whether the received data stream has even parity, odd parity, mark parity or space parity and for determining the character length of the protocol used. Using the system and method of the present invention, a data stream conforming to predetermined rules must be used, i.e., two characters of a set of characters must be transmitted initially so that the system can detect the speed, parity and character length of the remote device so that the remainder of the system may configure itself accordingly.

## Description

### BACKGROUND OF THE INVENTION

### I. Field of the Invention

The present invention relates to asynchronous communications systems and, more particularly, to a system and method for automatically detecting the signal baud rate, the parity and the character length of a device in an asynchronous communications network.

### II. Background and Prior Art

Asynchronous communications networks have evolved from being isolated within a "glass house" where a mainframe and connecting 3270- type terminals were located and communicated asynchronously to being ubiquitous in the sense that many homes today are fashioned with personal computers having modems for communicating asynchronously with information networks. Clearly, this pattern will continue for some time.

Generally, asynchronous protocols are lower-speed connections with irregular timing, delays are possible between bytes of data. (The other form of data transmission is synchronous where a group of characters is sent in a continuous bit stream; data transfer is controlled by a clock, initiated at the sending device.) Asynchronous communications works well with irregular data input rates, such as those associated with interactive communications, for example, when a home user is communicating with an online service.

Asynchronous communications uses serial data transfer. Transmission is bit by bit rather than parallel. To transmit serially, parallel codes must be converted to a serial bit stream to travel over the communications line. Therefore, the serial bit stream must be broken up into individual characters, from five to eight bits in length (normally seven or eight bits). These characters are defined by adding start and stop bits to the beginning and end, respectively, of the characters.

Furthermore, the serial bit stream may be transmitted from a sending machine to a receiving machine at one of a variety of speeds measured in bits per second (bps). Baud is a communication term corresponding to bps. Thus, 4,800 baud is 4,800 bps over the communication medium. Examples of baud rates are 1,200 baud, 4,800 baud, 19,200 baud and 64,000 baud. The fastest of present equipment is limited to 64,000 baud but this rate is sure to increase in the future.

All data which is communicated exists in a coded format so that it may be understood by the receiving machine. The most common codes in use today are the American Standard Code for Information Interchange (ASCII) and the Extended Binary-Coded Decimal Interchange (EBCDIC).

EBCDIC defines 256 characters, each represented by eight bits, binary 1s and 0s.

ASCII defines 128 standard characters while extended ASCII includes codes 128 to 256 which are not standardized. All characters are represented by seven bits, binary 1s or 0s; an eighth bit can be added for parity checking.

The most critical element in transferring data between two systems is to ensure integrity. Telephone lines are an efficient medium for transferring digital data but are subject to interference from storms, cross talk, echoes, and other lines. This interference destroys data integrity and propagates errors.

Parity is the simplest form of error detection. With parity, a bit is appended to each character, and the receiving system verifies the number of bits in each character according to the parity setting. For the purposes of this specification, there are four forms of parity which may be selected: 1) odd parity; 2) even parity; 3) mark parity; or 4) space parity. For example, if odd parity is selected, the parity bit is set to 1 or 0 so that the total number of 1s, excluding the start and stop bits, is always odd. For even parity, the parity bit is set similarly - only so that the total number of 1s is always even. For mark parity, the parity bit is always set to 1. This is analogous to having no parity. For space parity, the parity bit is always set to 0. Space parity is rarely used.

Most communications programs allow the user to select character length, set stop and start bits, and set parity. These settings must be the same on both the sending and receiving computers. Further, each user may be operating at a different transmission speed - depending, for instance, upon the user's equipment. Thus, each user may have different character length settings, different parity settings and operate at different speeds. Because each online service that a user may wish to access has a specific required setting for character length and for parity, the user must know these required settings and reset his/her communications software to correspond with the service's requirements. This requires that the user be familiar enough with his/her system to know how to make these changes and to know what the specific requirements are.

There are present systems which automatically provide detection of settings being implemented by a communicating system. For instance, in patents Anderson, U. S. Patent No. 3,775,751, and in Schulze, U. S. Patent No. 3,747,074, a system for baud rate detection is disclosed. In the disclosed system, a baud rate code, represented by the time interval between signal state transitions or the length of a single bit, is measured and correlated with measured time intervals to arrive at the transmitted baud rate. Neither the Anderson nor the Schulze system provides for detection nor determination of the parity setting nor the character length setting of the remote system.

In commonly assigned Key et al., U. S. Patent No. 5,008,902, another system for determining the baud rate of a data stream is disclosed. In the Key et al. system, samples of data transmitted from a remote device are stored in memory until a set of samples are accumulated. After some processing the samples are compared to a known set of autobaud characters. The comparison and reprocessing of the stored sample set are repeated until an autobaud character match is found or an error situation is determined. The Key et al. system does not disclose a system for automatically determining the parity setting nor the character length setting of the remote device.

In Lese et al., an asynchronous interface for coupling data between a terminal and a data module is provided. The asynchronous interface directly determines the transmission rate of the serial data by configuring counting circuitry therein for measuring the period of the start bit in the first received character whenever the speed of data being transmitted by the terminal must be detected. The asynchronous interface then adjusts to the newly determined data rate and receives the remaining bits at the new rate. The Lese et al. asynchronous interface does not provide for either parity setting nor character length detection.

Presently, there is no mechanism for automatically detecting and determining the speed (baud rate), parity setting and character length setting of a remote device in an asynchronous network environment.

### SUMMARY OF THE INVENTION

The method according to the present invention for automatically detecting baud rate, parity and character length of an asynchronous data bit stream wherein bits of opposite value are separated by a line transition, said data stream comprising a first and a second character, each character having a START and a STOP indicator, one of said first or second characters having a single bit transition (two successive line transitions separated by a single bit), said first character having a different parity bit than said second character where parity is enforced, comprises :
a) detecting said START indicator of said first character;
b) counting the duration of time until the next successive line transition;
c) storing the count in a corresponding memory location;
d) repeating steps b) and c) until said STOP indicator of said second character is detected;
e) inspecting the contents of said memory locations;
f) determining the baud rate based upon the duration of time of said single bit transition;
g) reconstructing said two characters from said data bit stream; and
h) determining the parity and the character length of the received data bit stream based upon said contents of said memory locations.

In addition step h) further comprises the step of determining parity and character length based upon said contents of at least two memory locations.

Step h) may further comprises the step of determining parity and character length based upon a first memory location for storing the count immediately preceding said STOP indicator of said first character and upon a second memory location for storing the count immediately preceding said STOP indicator of said second character.

One of said first or second memory locations comprises a parity bit of the corresponding first or second characters.

Step h) may further comprises the step of using a look-up table for determining parity and character length based upon the contents of said first and second memory locations.

### BRIEF DESCRIPTION OF THE DRAWINGS

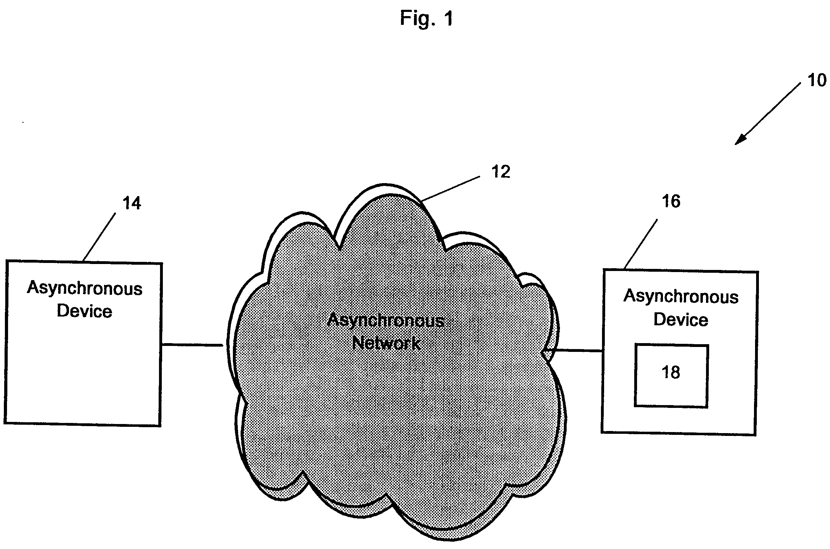

Fig. 1 illustrates an asynchronous communications network having two asynchronous communications devices, one utilizing a automatic speed, parity and character length detection apparatus of the present invention.

Fig. 2 illustrates in block diagram form an asynchronous device having the speed, parity and character length detection apparatus of the present invention.

Fig. 3 illustrates a bit stream representing two seven bit ASCII characters of a predefined format.

Fig. 4 illustrates a bit stream representing two eight bit ASCII characters of the same predefined format.

Fig. 5 illustrates the method of the present invention in flow chart form.

### DETAILED DESCRIPTION OF THE PREFERRED EMBODIMENT

A communications network 10 comprising an asynchronous network 12, an asynchronous communications device 14 and an asynchronous communications device 16 having the parity, speed and character length detection system 18 (autobaud/parity/character length system 18) of the present invention is shown. Through the asynchronous network 12, asynchronous devices 14 and 16 may communicate with one another by serial data transfer using an asynchronous communication protocol. As asynchronous devices 14 and 16 may be unrelated to one another, each may operate at different speeds, at different parity settings and at different character length settings. The autobaud/parity/character length system 18 of the present invention automatically determines the baud rate, parity setting and the character length setting of the sending device (asynchronous device 14, in this case) so that asynchronous device 16 may automatically be configured for communicating the sending device 14.

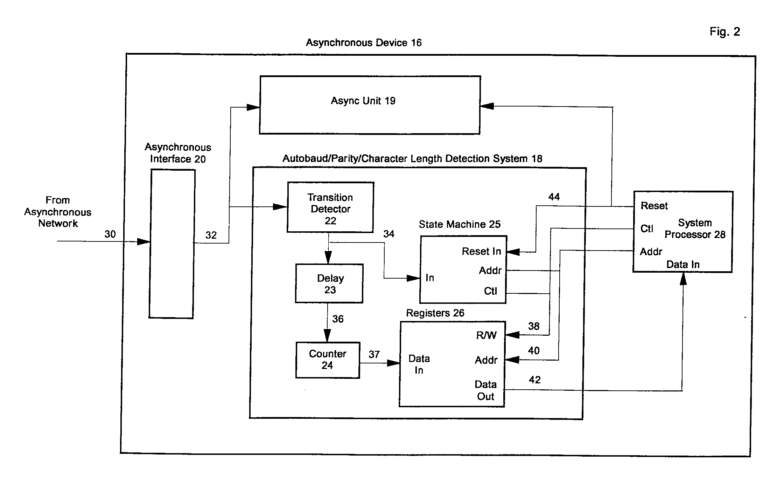

Figure 2 illustrates in block diagram form the asynchronous device 16 having the autobaud/parity/character length system 18 which automatically detects the speed, parity setting and character length setting of a received asynchronous data stream. In addition to autobaud/parity/character length system 18, device 16 has an async unit 19 which controls the actual asynchronous communications such as adding start and stop bits, adding parity, etc. Device 16 further has an asynchronous interface 20 which provides an interface to the asynchronous network by performing such functions as filtering, impedance matching, over-voltage protection, etc. For the purposes of this specification, asynchronous interface 20 is connected only to the RECEIVE line 30 of the asynchronous network. From the RECEIVE line 30, the asynchronous interface 20 receives the data stream and forwards it to both the async unit 19 and the autobaud/parity/character length system 18. A system processor 28 provides control for the asynchronous device 16.

Autobaud/parity/character length system 18 comprises a transition detector 22 for detecting data stream transitions, a delay circuit 23, a counter 24 for counting the duration of time between transitions, a state machine 25 for providing some control and a plurality of registers 26 for storing the time duration counts from the counter 24.

In general, the autobaud/parity/character length system 18 operates by detecting transitions in the data stream and by measuring and storing the duration of time between those transitions. From that data, the system processor can determine the line speed (from the shortest measured duration), the parity (to be discussed in greater detail below) and the character length setting (from the length of each character between marks).

In particular, the data stream is received by the transition detector 22 from the asynchronous interface 20 via line 32. The transition detector 22 detects transitions (either positive- or negative- going) within the data stream. When a signal transition is detected, a "detect" indicator signal is generated on line 34 which is transmitted to delay circuitry 23 and to state machine 25. State machine 25 determines, based upon the last transition received, which transition of the string of transitions previously received the present transition is, i.e., the first transition, the fourth transition, etc. The state machine generates a "WRITE" signal on line 38 to registers 26 and, based upon which transition is received, transmits the appropriate register address via line 40 so that the duration of time between the present transition and the following transition may be stored in the appropriate register.

The "detect" indicator signal on line 34 is delayed for a short period of time by delay circuitry 23 before being conveyed to counter 24 via line 36. This signal indicates to counter 24 that a transition has occurred and to begin counting until the next transition occurs. It is in this way that the duration of time between line transitions may be measured, thereby allowing the determination of the line speed (bits/second) of the sending device. The counter 24 should be at least a 2.4X oversampling counter so that it meets the Nyquist criterion and the original signal can be determined from the stored sample counts.

Upon receiving a transition, the counter 24 conveys to registers 26 via line 37 the duration of time between the received transition and the previous transition for storage in the appropriate register. As was discussed, the registers 26 are used to store the duration of time between line transitions, i.e., each register of the group of registers contains the amount of time between two line transitions of the received data string. State machine 25 controls which register stores which time duration. For instance, register 0 may contain the duration of time between the first line transition and the second, register I may contain the duration of time between the second line transition and the third, register 2 may contain the duration of time between the third line transition and the fourth, and so on. The results of the registers are stored until retrieved by system processor 28 via line 42. System processor 28 may retrieve the contents of any register by conveying its address via line 40 and a "READ" command along line 38. Based upon the register counts, the line speed, parity setting and character length setting can be determined by system processor 28.

In order to successfully implement the autobaud/parity/character length system 18, the sending device must transmit two (or more) characters having the following predefined characteristics: 1) either the first character or the second character (each represented by a five to eight bit data string) must contain a single bit transition, i.e., a "010" or a "101" bit string, in the data string; and 2) the two characters must have different even and odd parity values (if parity is enforced). For example, the two ASCII characters, "CR" and "Period" are represented in seven bit form and odd parity as "0001101" and "0101110", respectively, while the parity bit for each is "0" and "1", respectively. These two characters conform to the requirements as in each one there is at least one single bit transition, or a "010" or a "101" bit string, in either CR or Period and the two characters have different parity values ("0" for CR and "1" for Period). (If the sending device used neither odd or even parity, but rather used either mark or space parity, the two character would obviously need to have the same parity values and, thus, would not need to conform to the second requirement.)

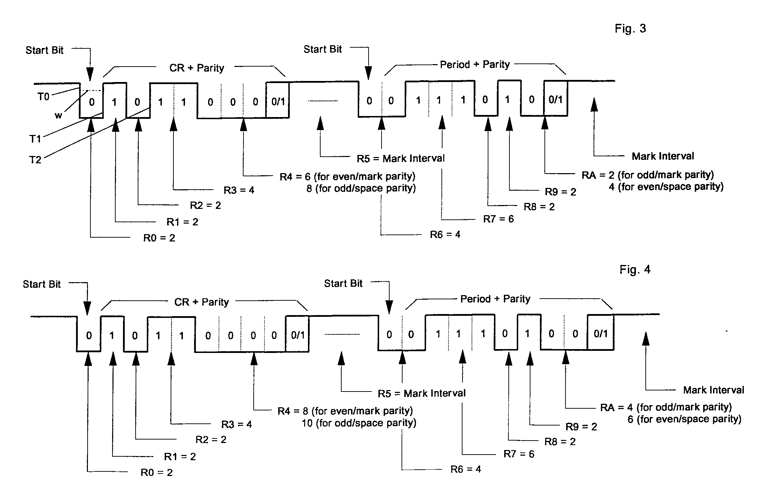

Figures 3 and 4 illustrate in greater detail the bit stream represented by the seven bit form and eight bit form, respectively, of the "CR" and the "Period" ASCII characters. It should be noted that no particular parity scheme is used in this example so that all may be discussed. Referring first to Figure 3, "CR" and "Period" in seven bit form is illustrated. As can be seen, initially, the line is at "Mark", or "1", which is the static state when no communication is occurring. This is the rule for asynchronous communication. Following the static state, a "START" bit, or negative-going transition T0, is followed by the least significant bit (LSB) through the most significant bit (MSB), a parity bit, and a "STOP" flag, or Mark Interval of a predetermined period of time (indicating the end of the character). This string of bits represents the "CR" ASCII character. Likewise, the second character, "Period", is represented by a "START" bit (following the Mark Interval), the LSB through the MSB, a parity bit and another Mark Interval, or "STOP" bit.

More specifically, at the first transition, T0, counter 24 (Figure 2) begins counting the duration of time (w) until the second transition, T1. This value is stored in register 0 (R0). At T1, counter 24 begins counting the duration of time until the third transition, T2, which value is stored in R1. This process is continued for "CR" until the Mark Interval is reached. The process is then repeated for the "Period" value.

In both examples (Figures 3 and 4), the received data strings are being transmitted at a baud rate of 64 kbits/sec, which is the maximum detectable line speed in these examples. Thus, for each single bit transition, i.e., "010", counter 24 will count twice between the initial transition and the following transition. (As another example, where the received data strings are being transmitted at one-fourth that rate, or 16 kbits/sec, counter 24 would count eight times for each single bit of the transmitted character string.) Therefore, a register value of "2" indicates that it represents the value of a single bit, a register value of "4" indicates that it represents the value of two bits, and so forth. In the example of Figure 3, the register values (R0 through RA) are as follows:
- R₀ count: = 2
- R₁ count: = 2
- R₂ count: = 2
- R₃ count: = 4
- R₄ count: = 6 (even/mark parity)
= 8 (odd/space parity)
- R₅ count: = Mark Interval
- R₆ count: = 4
- R₇ count: = 6
- R₈ count: = 2
- R₉ count: = 2
- R_{A} count: = 2 (for odd/mark parity)
= 4 (for even/space parity)

Likewise, in the example of Figure 4, the register value, (R₀ through R_{A}) are as follows:
- R₀ count: = 2
- R₁ count: = 2
- R₂ count: = 2
- R₃ count: = 4
- R₄ count: = 8 (even/mark parity)
= 10 (odd/space parity)
- R₅ count: = Mark Interval
- R₆ count: = 4
- R₇ count: = 6
- R₈ count: = 2
- R₉ count: = 2
- R_{A} count: = 4 (for odd/mark parity)
= 6 (for even/space parity)

Based upon the count register values, the various signal line characteristics, i.e., speed, parity and character length can be determined by the system processor. In particular, the line speed is calculated by determining the lowest register count value in either of the first and second characters. In this example, this value is 2. Because the sampling rate of the counter is known, the line speed, 64 kbits/second, can be easily determined.

With regard to parity and to character length, an inspection and comparison of the register values of the bit streams illustrated in Figures 3 and 4 show that all the register values, except R4 and RA, are equal for all parity and character length possibilities. (Register values R4 and RA contain the bit string values immediately prior to the Mark Interval indicating the "STOP" bit.) The values of registers R4and RA, however, are different for each case and, therefore may be used to determine parity and character length settings. (These values will always be different for the different character length and parity variations because they will be affected by the parity bit and the MSB.) The table below (TABLE 1) summarizes the contents of registers R4 and RA for "CR" and "Period" for a seven bit character, an eight bit character, even parity setting, odd parity setting, mark parity setting, and space parity setting.

**TABLE 1**

| | 7 Bit Character | | 8 Bit Character | |
|---|---|---|---|---|
| Parity | R₄ | R_{A} | R₄ | R_{A} |
| Even | 6 | 4 | 8 | 6 |
| Odd | 8 | 2 | 10 | 4 |
| Mark | 6 | 2 | 8 | 4 |
| Space | 8 | 4 | 10 | 6 |

With the exception of 7 Bit Character Length / Space Parity and 8 Bit Character Length / Mark Parity, all of the character length/parity possibilities have unique R4 and RA values. Therefore, each of the unique settings, with the two exceptions, can be determined by inspecting the R4 and RA register contents and, based upon those values, using a look-up table to determine the character length setting and the parity setting of transmitting device. For example, where R4 has a value of 10 and RA has a value of 4, it can be determined that the character length setting is eight while the parity setting is odd for the transmitting device. The receiving device can be likewise configured so that the two devices may communicate.

In the case where R4 has a value of 8 and RA has a value of 4, there is ambiguity in the look-up table in that the transmitting device may have a 7-bit character length setting with space parity or an 8-bit character length setting with mark parity. This will always be true as the waveforms of these two configurations are exactly the same. From the more practical point of view, the reason is simply that the 7- Bit/Space parity is a proper subset of the 8-Bit character set and is exactly the same as the 8-Bit/Mark parity signal waveform. From a configuration point of view, the receiving device can merely be configured in an 8-Bit/Mark parity setting. In this setting, the receiving device may properly receive either the 7-Bit/Space parity or the 8-Bit/Mark parity data stream.

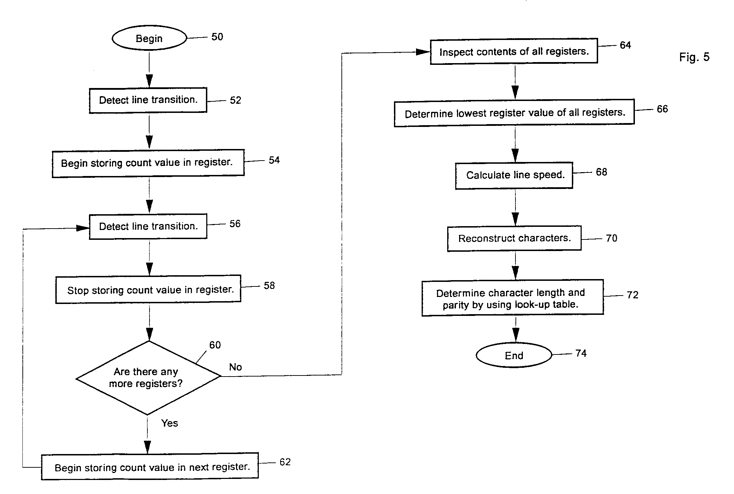

Figure 5 illustrates, in flow chart form, the process of the present invention for automatically determining the baud rate, the parity and character length settings of a received data string, the received data string conforming to the requirements detailed above. The process begins at 50 where the data stream is received at the transition detector 22 (Fig. 2) of the auto-baud/parity/character length detection system 18. At 52, the first line transition is detected. The count value of the time duration until the next transition is stored in a register at 54. The next line transition is detected at 56. At 58, the storing of the count value in the register is stopped. At 60, it is determined whether there are any registers left. (The system should be configured so as to provide sufficient register storage for the maximum expected character length. If sufficient register storage is not provided, character length and parity cannot be determined.) If so, at 62, the count value of the time duration until the next transition is stored in the following register until the next line transition is detected at 56. If not, at 64, the contents of all the registers are inspected. Based upon the lowest register value, which is determined at 66, the line speed is determined at 68. At 70, the characters are reconstructed by using the now-known line speed. At 72, the character length and parity values are determined by using a look-up table. At 74, the process is complete.

Thus, it can be seen that the method and system of the present invention allows an incoming asynchronous data stream to be received inspected and, based upon the inspection, determine its line speed, parity setting and its character length setting. Based upon these determinations, the receiving device may be automatically self-configure so that it may properly communicate with the sending device. While the invention has been particularly shown and described with reference to preferred embodiments thereof, it will be understood by those skilled in the art that various other changes in form and detail may be made without departing from the spirit and scope of the invention.

## Claims

1. A system for automatically detecting baud rate, parity and character length of an asynchronous data bit stream wherein bits of opposite value are separated by a line transition, said data stream comprising a first and a second character, each character having a START and a STOP indicator, one of said first or second characters having a single bit transition (two successive line transitions separated by a single bit), said first character having a different parity bit than said second character where parity is enforced, said system comprising:
a line transition detector;
a counter for counting the duration of time between each successive line transition;
a memory having a plurality of memory locations;
means for storing each count in a corresponding memory location;
means for inspecting the contents of said memory locations;
means for determining the baud rate based upon the duration of time of said single bit transition;
means for reconstructing said two characters from said data bit stream; and
means for determining the parity and the character length of the received data bit stream based upon said contents of said memory locations.

2. The system defined in claim 1 wherein said parity and character length determining means determines parity and character length based upon said contents of at least two memory locations.

3. The system defined in claim 1 or 2 wherein said memory comprises a plurality of registers corresponding to said memory locations.

4. The system defined in claim 3 wherein said parity and character length determining means determines parity and character length based upon a first register for storing the count immediately preceding said STOP indicator of said first character and upon a second register for storing the count immediately preceding said STOP indicator of said second character.

5. The system defined in claim 4 wherein one of said first or second registers comprises a parity bit of the corresponding first or second characters.

6. The system defined in any one of claims 1 to 5 wherein said character reconstructing means reconstructs said characters based upon said baud rate.

7. A method for automatically detecting transmission rate, parity and character length of a stream of data having a first character and a second character, said characters being represented by binary digits comprising positive and negative going transitions and each having a START indicator and a STOP indicator, at least one of said characters having a positive and a negative going transition separated by a duration one binary digit in length, and said first character having a different parity bit from said second character when parity is odd or even, said method comprising the steps of:
a) detecting a first of said transitions;
b) detecting another of said transitions following said first transition;
c) counting the duration of time between said first transition and said following transition;
d) storing the count in a register;
e) detecting a next transition;
f) counting the duration of time between the previous transition and said next transition;
g) storing the count in another register;
h) repeating steps (e), (f), and (g) until said STOP indicator of said second character has been reached;
i) inspecting the contents of each register;
j) determining the lowest non-zero count value of said registers;
k) determining the baud rate based on said lowest non-zero count value;
l) reconstructing said first and second characters based upon said baud rate; and
m) using a look-up table for determining character length and parity based upon the count values.

8. An asynchronous network having a first transmitting device and a second receiving device, said second receiving device having a system according to any one of claims 1 to 6 for automatically detecting baud rate, parity and character length of an asynchronous data bit stream transmitted by said first transmitting device wherein bits of opposite value are separated by a line transition, said data stream comprising a first and a second character, each character having a START and a STOP indicator, one of said first or second characters having a single bit transition (two successive line transitions separated by a single bit), said first character having a different parity bit than said second character where parity is enforced.

9. A data bit stream transmitting device for use in the asynchronous network according to claim 8 comprises means for generating and transmitting a data bit stream comprising a first and a second character of a predefined character length and parity, each character having a START and a STOP indicator, one of said first or second characters having a single bit transition (two successive line transitions separated by a single bit), and said first character having a different parity bit than said second character where parity is either odd or even.
